# EUROPÄISCHE PATENTSCHRIFT

(11) **EP 1 880 765 B1**
(45) Veröffentlichungstag und Bekanntmachung des Hinweises auf die Patenterteilung: **03.06.2015**
(21) Anmeldenummer: 07020703.0
(22) Anmeldetag: 28.02.2003
(51) Int. Cl.: B01J 19/00, B01L 3/00, G01N 27/447

(54) **Mikrofluidsystem**
Microfluidic system
Système microliquide

(30) Priorität: 22.04.2002 DE 10217846; 21.08.2002 DE 10238266; 28.02.2002 EP 02004685
(43) Veröffentlichungstag der Anmeldung: 23.01.2008
(62) Teilanmeldung aus: 03742969.3
(73) Patentinhaber: ibidi GmbH, 82152 Martinsried (DE)
(72) Erfinder: Kahl, Johan-Valentin, Dr., 80797 München (DE)
(74) Vertreter: Grünecker Patent- und Rechtsanwälte PartG mbB

(56) Entgegenhaltungen:
- WO-A-00/21659
- WO-A-01/30490
- WO-A-01/71331
- WO-A-02/30560
- WO-A-98/10122
- WO-A1-99/43432
- US-A- 5 890 745

## Beschreibung

Die Erfindung betrifft ein Mikrofluidsystem mit mindestens einem durchströmbaren Volumen und mindestens einer mit dem Volumen verbundenen Anschlusseinrichtung sowie eine Steckereinrichtung zur Verwendung in einem solchen Mikrofluidsystem.

Mikrofluidsysteme, auch mikrofluidische Systeme genannt, haben hohes Potential bei der Analyse und Diagnostik in biologischen und medizinischen Anwendungen. Außerdem können sie zur Synthese von chemischen und biologischen Produkten, z.B. als Durchflussreaktoren, verwendet werden.

Mikrofluidische Systeme zeichnen sich dadurch aus, dass in kleinen Strukturen sehr geringe Mengen von flüssigen Medien transportiert werden. Dabei variiert das Flüssigkeitsvolumen von 10 ml bis unter 1 nl. Ein klarer Trend in der Mikrofluidik geht dahin, dass einzelne Komponenten durch spezielle Verbindungen zu einem Gesamtsystem untereinander verbunden werden sollen. Neben der Verbindung von mikrofluidischen Komponenten untereinander spielt gerade der Anschluss an die makroskopische Welt eine wichtige Herausforderung dar. Durch die miniaturisierten Strukturdimensionen, die typischerweise zwischen Nanometern und Millimetern liegen, werden an die Verbindungen besondere Anforderungen gestellt.

Diese sind: einfaches Anschließen und Lösen der Verbindungen; hohe Stabilität gegen ungewolltes Lösen; hohe Dichtheit gegen Gas- und Flüssigkeitsaustausch; geringes Totvolumen im Verhältnis zum Volumen der mikrofluidischen Komponente; Verhinderung des Eindringens von unerwünschter Luft bei Herstellung der Verbindung (Luftblasen); Gewährleistung der Sterilität. Die Verbindungen sollte darüber hinaus biokompatibel und eventuell durchsichtig sein, um z. B. nachprüfen zu können, ob das Medium die Struktur tatsächlich durchströmt. Die Lösung sollte parallelisierbar und in der Herstellung günstig sein.

Es existieren zahlreiche als mikrofluidische Systeme bezeichnete Apparaturen.

Aus der US 5170286 (WO 9215037) ist z.B. eine Beobachtungskammer für Mikroskopie in Verbindung mit einem angeschlossenen Flußsystem bekannt. Es handelt sich dabei um eine "Sandwich"-Konstruktion die im wesentlichen aus einer speziellen Halterung (,central chamber element') besteht, in die Mikroskopie-Deckgläschen eingelegt werden, welche durch Deckplatten (,cover plates') fixiert werden. Der Durchfluss muss in dieser Kammer durch Schlauchverbindungen zu einem nicht auf der Kammer aufgebrachten Reservoir erzeugt werden. Über die Anschlüsse, insbesondere ihre Eigenschaften wie Stabilität, Dichtigkeit, einfache Handhabung, Totvolumen etc. werden keine Aussagen gemacht. Es wird auch nicht beschrieben, wie dieses anhand der Anschlussgeometrie gewährleistet werden kann.

In der WO 97/38300 ist ein Mikrokanalsystem aus Acryl beschrieben, das der elektrophoretischen Auftrennung dient. Der Mikrokanal wird jedoch nicht zum Durchspülen von Flüssigkeiten verwendet. Über die Anschlussgeometrie im Zusammenhang mit den genannten Anforderungen wird ebenfalls nichts berichtet.

In der WO 90/05295 ist ebenfalls ein optisches Biosensorsystem mit Kanälen beschrieben. Mittels Ventilen und Pumpen wird die zu untersuchende Flüssigkeit geführt. Über spezielle Geometrien der Anschlüsse und besondere Ausführungen der Anschlüsse zur Lösung der genannten Probleme wird hier ebenfalls nichts berichtet.

In der DE 197 11 281 C1 ist ebenfalls eine Vorrichtung mit mikrofluidischen Komponenten beschrieben. Der Schwerpunkt dieser Patentschrift liegt bei der Anordnung und Integration der funktionellen Schichten in dem Träger. Über die Geometrie der Anschlüsse wird hier generell nichts berichtet.

Über Deckelsysteme, welche die Flußkammem abschließen und spezielle integrierte Komponenten enthalten, wird in den genannten Schriften nichts berichtet.

Aus dem Stand der Technik zu Mikrofluidsystemen ist daher nicht bekannt, wie die oben genannten gewünschten Eigenschaften von Verbindungen und Anschlüssen verwirklicht werden soll.

Bisher bestehende Anschlüsse zum Einfüllen von Gasen oder Flüssigkeiten, wie z. B. Schlauchklemmen, verhindern zwar effektiv das Austreten von Gasen und Flüssigkeiten, sind aber in miniaturisierter Form sehr unhandlich. Die genormten Anschlüsse, die aus der Medizintechnik bekannt sind (Din-Taschenbuch 227, Medizinische Einmalartikel, Vertikale Normen Beuth Verlag 1999), weisen im allgemeinen im Verhältnis zum Gesamtvolumen ein viel zu hohes Totvolumen auf. Dadurch ist besonders der Umgang mit kleinen Probenmengen nicht möglich. Auch sind die dort gezeigten Steckverbindungen nicht für die Verwendung mit mikrofluidischen Komponenten wie z.B. planaren Flußkammem vorgesehen oder optimiert. Das Verwenden von Schraubverschlüssen widerspricht bei vielen Anwendungen der Anforderung, schnell eine Flüssigkeit in einen Kanal einfüllen zu können. Diese können und werden jedoch zum festen Verschließen von z.B. Flußkammern verwendet. Auch eignen sich geklebte Verbindungen nicht für einmalverwendbare Analysechips.

In der US 5,890,745 ist ein mikrofluidischer Koppler zum Verbinden einer Kapillare mit einem Flusskanal beschrieben. Dafür wird die Kapillare mit einem Einschubkanal in Eingriff gebracht. Eine Kapillarführungsvorrichtung ist beschrieben, die eine sich verjüngende Vertiefung aufweist. '

Aus der WO 01/71331 ist ein Elektrophoresemikrochip bekannt, der einen Hauptkanal sowie Durchgangsbohrungen umfasst, wobei mindestens eine der Durchgangsbohrungen, die von außen zu den Enden des Hauptkanals führen, konisch ausgebildet sein kann. Durch diese Durchgangsbohrungen können Kapillaren mit dem Hauptkanal verbunden werden.

In der WO 01/30490 ist eine Mikrofluidvorrichtung beschrieben, die konisch geformte Reservoire umfasst, die mit einem Kanal verbunden sind. Die Reservoire können durch eine geeignete Abdeckung verschlossen werden.

Es ist die Aufgabe der Erfindung, die genannten Nachteile zu überwinden und ein Mikrofluidsystem und eine Steckereinrichtung bereitzustellen, durch die in schneller und einfacher Weise ein Durchfluss und Austausch von geringen Flüssigkeitsmengen und/oder ein Abschluß von kleinen Flüssigkeitsvolumina ermöglicht wird.

Diese Aufgabe wird gelöst durch ein System gemäß Anspruch 1.

Das System umfasst ein Mikrofluidsystem mit mindestens einem durchströmbaren Volumen und mindestens einer mit dem Volumen verbundenen Anschlusseinrichtung, die in Form einer sich verjüngenden Vertiefung oder einer sich verjüngenden Erhöhung ausgebildet ist. Durch diese spezielle Geometrie der Anschlusseinrichtung kann gewährleistet werden, daß eine Steckereinrichtung schnell, einfach und insbesondere flüssigkeitsdicht an das Mikrofluidsystem angeschlossen werden kann. Außerdem kann durch diese Geometrie das Totvolumen verringert werden.

Ein weiterer Vorteil der hier beschriebenen Mikrofluidsysteme besteht darin, dass das Mikrofluidsystem selbst sehr dünn in Form eines herkömmlichen Objektträgers ausgebildet werden kann (z.B. 1-1.5mm dick), während für die benötigten Zusatzeinrichtungen, bspw. für die Flüssigkeitszufuhr, externe Komponenten verwendet werden können, die an- und wieder abmontiert werden können.

Vorzugsweise verjüngt sich die Anschlusseinrichtung konisch, hyperbolisch, abschnittsweise konisch und/oder abschnittsweise hyperbolisch. Damit kann ein fester Anschluss von Steckereinrichtungen ermöglicht werden. Insbesondere können Steckereinrichtungen mit unterschiedlichen Formen und Abmessungen verwendet werden, die je nach Form und/oder Abmessung unterschiedlich weit in oder auf die Anschlusseinrichtung gesteckt werden können.

Es ist von Vorteil, wenn die Anschlusseinrichtung durch ihre Form und/oder Abmessungen an üblicherweise verwendete Laborkomponenten angepasst ist. Beispielsweise kann die sich verjüngende Vertiefung an Standardpipettengrößen und -formen angepasst sein. Bei einer abschnittsweise konischen Vertiefung besteht die Vertiefung gewissermaßen aus aufeinanderfolgenden Kegelstümpfen mit unterschiedlichen, vorzugsweise sich nach unten verringernden, Öffnungswinkeln. Dadurch können verschiedene Pipetten mit unterschiedlichen Neigungs- bzw. Öffnungswinkeln fest mit der Anschlusseinrichtung verbunden werden. Auf diese Weise kann auch das Totvolumen weiter verringert werden. Wegen der speziellen Form der Vertiefung können dünne Pipettenspitzen mit wenig Flüssigkeitsvolumen tiefer in die Anschlusseinrichtung gesteckt werden als große Pipettenspitzen. Das Flüssigkeits- bzw. Luftvolumen zwischen der Pipettenspitze und dem durchströmbaren Volumen wird somit minimiert. Daher können verschieden große Pipettenspitzen für dieselbe Anschlusseinrichtung verwendet werden, wobei alle Pipettenspitzen dicht mit der Anschlusseinrichtung abschließen.

Bei einer hyperbolischen Vertiefung können Flüssigkeiten mit Hilfe einer Pipette in das durchströmbare Volumen gedrückt werden; alternativ fließen die Flüssigkeiten beim Abziehen der Pipette aufgrund der Kapillar- und/oder Gravitationskraft in das Volumen.

Eine Anschlusseinrichtung in Form einer sich verjüngenden Erhöhung kann so ausgebildet sein, dass sie an Injektionsflaschenstopfen und/oder Deckelflaschenstopfen angepasst ist. Das Material der Injektionsflaschenstopfen kann beispielsweise Gummi oder Chlorbutyl umfassen.

Gemäß einer vorteilhaften Weiterbildung aller zuvor beschriebenen Mikrofluidsysteme weist das Mikrofluidsystem eine strukturierte Oberfläche auf. Vorzugsweise ist die Strukturierung in Form von Erhöhungen, insbesondere von sich verjüngenden Erhöhungen, ausgebildet. Es ist von Vorteil, wenn die Anschlusseinrichtungen in diesen Erhöhungen ausgebildet sind, insbesondere in Form einer sich verjüngenden Vertiefung. Die innere und äußere Form und Abmessung einer solchen Erhöhung mit einer darin ausgebildeten Anschlusseinrichtung können an üblicherweise verwendete Laborkomponenten angepaßt sein. Damit kann erreicht werden, daß durch die sich verjüngende Erhöhung einerseits eine Steckereinrichtung in schneller, einfacher und stabiler Weise aufgesteckt werden kann; gleichzeitig kann andererseits durch die angepasste Vertiefung eine feste und dichte Verbindung für den Durchfluss von Flüssigkeiten erreicht werden.

Gemäß einer vorteilhaften Weiterbildung aller zuvor beschriebenen Mikrofluidsysteme weist die Anschlusseinrichtung einen Absatz auf. Dadurch kann eine Steckereinrichtung nur bis zu dem Absatz auf oder in die Anschlusseinrichtung gesteckt werden. Insbesondere bei einer Anschlusseinrichtung in Form einer Vertiefung kann somit verhindert werden, daß eine Steckereinrichtung durch zu tiefes Hineinstecken das durchströmbare Volumen verstopft. Ein solcher Absatz muß dabei nicht um den ganzen Innen- oder Außenumfang der Anschlusseinrichtung herumlaufen, er kann beispielsweise in Form eines Halbringes ausgebildet sein.

Vorzugsweise weist die Anschlusseinrichtung der bisher beschriebenen Mikrofluidsysteme eine Aussparung zur Aufnahme eines Einrastelements auf. Somit kann eine Steckereinrichtung mit einem Einrastelement fest mit der Anschlusseinrichtung verbunden und schnell wieder gelöst werden. Die Aussparung kann um die gesamte Anschlusseinrichtung herumlaufen oder auch nur an einzelnen Stellen ausgebildet sein.

Vorzugsweise ist die Anschlusseinrichtung aller zuvor beschriebenen Mikrofluidsysteme als Anschlusseinrichtung zur Aufnahme eines Luer-Lock-Element ausgebildet.

Ist es nicht erforderlich, die Steckereinrichtung schnell mit der Anschlusseinrichtung zu verbinden und von ihr zu lösen, kann die Anschlusseinrichtung ein Gewinde aufweisen. Damit kann eine besonders feste und stabile Verbindung zwischen einer Steckereinrichtung und der Anschlusseinrichtung erzielt werden.

Gemäß einer vorteilhaften Weiterbildung aller zuvor beschriebenen Mikrofluidsysteme ist an der Anschlusseinrichtung ein Verschlusselement zur Verschließen der Anschlusseinrichtung angeordnet. Somit kann beispielsweise ein Eindringen von Verunreinigungen, falls die Anschlusseinrichtung nicht, zum Beispiel an einen Stecker, angeschlossen ist, verhindert werden. Eine solches Verschlusselement kann entweder derart ausgebildet sein, daß es auf reversible Weise geöffnet werden kann oder daß es nur auf irreversible Weise geöffnet werden kann. Das Verschlusselement kann beispielsweise als Folie oder Membran ausgebildet sein. Ein solches Verschlusselement kann dann irreversibel geöffnet werden, indem es durch Beaufschlagung mit Druck, durch einen Stecker, durch eine Pipette, durch Flüssigkeit, oder ähnliches, perforiert wird. Für eine reversible Öffnungsmöglichkeit kann das Verschlusselement beweglich angeordnet sein, so daß es beispielsweise bei Beaufschlagung mit Druck aus einer die Anschlusseinrichtung verschließenden Stellung in eine Stellung bewegt wird, in der die Anschlusseinrichtung geöffnet ist. Nach Beendigung dieser Druckbeaufschlagung kann das Verschlusselement wieder in die verschließende Stellung zurückkehren.

Ein bevorzugtes Verschlusselement kann eine funktionalisierte oder behandelte Oberfläche aufweisen. Die Oberfläche kann beispielsweise hydrophob sein.

In einer bevorzugten Weiterbildung aller zuvor beschriebenen Mikrofluidsysteme ist in dem Mikrofluidsystem mindestens ein weiteres durchströmbares Volumen ausgebildet, welches oberhalb des mindestens einen durchströmbaren Volumens in die Anschlusseinrichtung mündet. Auf diese Weise kann erreicht werden, daß durch einen Stecker, der an der Anschlusseinrichtung angeordnet wird, der wenigstens eine Kanal verschlossen wird.

Es ist von Vorteil, wenn die Anschlusseinrichtung aller oben beschriebenen Mikrofluidsysteme ein optisch transparentes Material umfasst. Dadurch kann auf optischem Wege beispielsweise überprüft werden, ob eine Flüssigkeit die Anschlusseinrichtung und/oder das Volumen durchströmt, ob sich Gasblasen bilden und/oder ob eine optimale Verbindung zwischen der Anschlusseinrichtung und einer Steckereinrichtung besteht.

Vorzugsweise umfassen die oben beschriebenen Mikrofluidsysteme mehrere Anschlusseinrichtungen, die mit einem oder mehreren durchströmbaren Volumina verbunden sind. Insbesondere können die Anschlusseinrichtungen derart angeordnet sein, dass mehrere Anschlusseinrichtungen gemeinsam mit einer Steckervorrichtung verbunden werden können.

Vorteilhafterweise umfasst das Material aller oben beschriebenen Mikrofluidsysteme ein optisch hochwertiges Glas oder einen optisch hochwertigen Kunststoff, d. h. der Kunststoff weist keine Doppelbrechung und/oder Autofluoreszenz auf. Hierfür können beispielsweise cyclische Olefine und Polycarbonat verwendet werden. Ferner kann der Boden und/oder die Decke des durchströmbaren Volumens, entsprechend den Erfordernissen der verwendeten Untersuchungsmethode, eine Dicke aufweisen, die geringer als 190 µm ist. Dadurch werden optimale Eigenschaften für eine Vielzahl von Untersuchungsverfahren erreicht.

Für bestimmte Untersuchungsmethoden, wie z. B. Wechselwirkungsuntersuchungen zwischen Molekülen, ist es wünschenswert, die Moleküle, Makromoleküle oder Zellen zu immobilisieren. Hierfür kann eine innere Oberfläche des durchströmbaren Volumens und/oder der Anschlusseinrichtung oberflächenbehandelt oder funktionalisiert sein, wie beispielsweise durch Molekülgruppen, Gruppen (z.B.-COOH, -NH2, Ketone, Alkohole) oder Makromolekülen wie DNA oder Proteinen. Die auf dieser Oberfläche immobilisierten Proben können bei Reaktion mit einem in Lösung befindlichen Stoff (z. B. Molekül) eine charakteristische Änderung ihres Spektrums aufweisen oder ein charakteristisches Fluoreszenzsignal aussenden. Mit Hilfe des Mikrofluidsystems ist es möglich, die in Lösung befindlichen Moleküle herauszuspülen, so dass dieses Signal störungsarm quantitativ analysiert werden kann. Im Bereich der Anschlusseinrichtung kann die innere Oberfläche des Mikrofluidsystems oberflächenbehandelt oder beschichtet sein. Dadurch kann bspw. erreicht werden, dass die innere Oberfläche in diesem Bereich hydrophob ist. Auf diese Weise kann eine Flüssigkeit von der Anschlusseinrichtung weg in das durchströmbare Volumen geleitet werden, wodurch beispielsweise Verunreinigungen, die von außen durch die Anschlusseinrichtung eindringen, von der Flüssigkeit ferngehalten werden können.

Die beschriebenen Mikrofluidsystem können vorzugsweise aus einem Stück bestehen. Es gibt somit keine Elemente die vor der Benutzung gereinigt werden müssen, und es kann mit geringen Aufwand steril gehalten werden. Es muss auch vor der Benutzung nicht aufwendig zusammengefügt werden. In diesem Fall ist es normalerweise auch nur zur einmaligen Benutzung vorgesehen

Erfindungsgemäß umfasst das beanspruchte System eine Steckereinrichtung, die derart ausgebildet ist, dass sie in Eingriff mit einen Anschlusseinrichtung der Mikrofluidsystems bringbar ist. Insbesondere kann die Steckereinrichtung derart ausgebildet sein, dass eine feste, insbesondere flüssigkeitsdichte, Verbindung zwischen der Steckereinrichtung und der Anschlusseinrichtung gebildet werden kann. Dazu kann die Steckereinrichtung ein sich verjüngendes Teilelement aufweisen, das an die Verjüngung der Anschlusseinrichtung angepasst ist. Bei einer Anschlusseinrichtung in Form einer sich verjüngenden Vertiefung kann die Steckereinrichtung ebenfalls ein sich in Steckrichtung, mit anderen Worten nach unten, verjüngendes Teilelement aufweisen. Analog kann bei einer Anschlusseinrichtung in Form einer sich verjüngenden Erhöhung die Steckereinrichtung ein sich gegen die Steckrichtung verjüngendes Teilelement aufweisen. Somit kann die Verbindung zwischen Steckereinrichtung und Anschlusseinrichtung ein geringes Totvolumen aufweisen

Bei einer Anschlusseinrichtung in Form einer Vertiefung kann die Steckereinrichtung derart ausgebildet sein, dass sie, nachdem sie mit der Anschlusseinrichtung in Eingriff gebracht wurde, nicht über die Oberfläche des Mikrofluidsystems ragt.

Erfindungsgemäß ist die Steckereinrichtung derart ausgebildet, dass sie wenigstens teilweise flächig an der Anschlusseinrichtung anliegt. Dadurch kann eine besonders feste und stabile Verbindung mit der Anschlusseinrichtung erreicht werden.

Vorteilhafterweise können die beschriebenen Steckereinrichtungen derart ausgebildet sein, dass sie gasdurchlässig in Eingriff mit der Anschlusseinrichtung bringbar sind. Dies kann dadurch erreicht werden, dass zumindest teilweise ein Abstand, bspw. mittels Abstandhalter, zwischen Steckereinrichtung und Anschlusseinrichtung ausgebildet wird. Steckereinrichtung und Anschlusseinrichtung können so aufeinander abgestimmt sein, dass die Steckereinrichtung durch festes Andrücken gasundurchlässig in Eingriff bringbar ist. Dies kann beispielsweise durch Abstandhalter aus elastischem Kunststoff in Form von Ausbuchtungen erzielt werden.

Gemäß einer vorteilhaften Weiterbildung aller zuvor beschriebenen Steckereinrichtungen umfassen diese mindestens ein Einrastelement in Form einer Ausbuchtung. Dadurch kann die Steckereinrichtung schnell mit einer entsprechenden Anschlusseinrichtung in Eingriff gebracht werden und außerdem eine feste Verbindung bilden. Die Steckereinrichtungen können dann zusätzlich derart ausgebildet sein, dass sich die Einrastelemente wieder leicht ausrasten lassen, um so die Verbindung zwischen Anschlusseinrichtung und Steckereinrichtung zu lösen. Dazu können weitere Ausbuchtungen derart ausgebildet sein, dass durch Beaufschlagung mit Druck ein Drehmoment entsteht, wodurch sich die Einrastelemente ausrasten lassen. Alle beschriebenen Ausbuchtungen können um die Steckereinrichtung herumlaufen oder nur an einzelnen Stellen ausgebildet sein. Die Einrastelemente können bspw. in Form von Widerhaken ausgebildet sein.

Gemäß einer vorteilhaften Alternative weist die Steckereinrichtung ein Gewinde auf. Damit kann ein festes Verbinden von Steckereinrichtung und Anschlusseinrichtung ermöglicht werden.

Gemäß einer weiteren vorteilhaften Alternative kann die Steckereinrichtung nach Art eines Kronkorkens mit der Anschlusseinrichtung verbunden werden. Dabei wird die Steckereinrichtung auf die Anschlusseinrichtung gepresst. Dadurch kann eine höhere Sterilität gewährleistet werden.

Erfindungsgemäß ist die Steckereinrichtung derart ausgebildet, dass sie an einem Teil der die Aufnahmeeinrichtung umgebenden Oberfläche des Mikrofluidsystems flächig anliegt. Dadurch kann eine stabile Verbindung zwischen Steckereinrichtung und Anschlusseinrichtung gewährleistet werden.

Gemäß einer bevorzugten Weiterbildung umfasst jede der zuvor beschriebenen Steckereinrichtungen ein optisch transparentes Material. Dadurch kann bspw. der Fluß durch die Steckereinrichtung und/oder das Volumen, das Vorhandensein von Luftblasen und/oder die Verbindung zwischen Steckereinrichtung und Anschlusseinrichtung optisch überprüft werden.

Es ist von Vorteil, wenn die zuvor beschriebenen Steckereinrichtungen ein biokompatibles Material umfassen. Damit können unerwünschte Wechselwirkungen zwischen Flüssigkeit und Material vermieden werden. Die Steckereinrichtungen können beispielsweise ganz oder teilweise aus biokompatiblem Material bestehen oder mit einem biokompatiblen Material ganz oder teilweise beschichtet sein.

Gemäß einer vorteilhaften Weiterbildung aller zuvor beschriebenen Steckereinrichtungen umfassen diese mindestens ein Durchgangsloch. Mit einem Durchgangsloch kann die Zuführung von Flüssigkeit und oder Gasen ermöglicht werden. Vorzugsweise wird jedes Durchgangsloch mit einer Zuführeinrichtung, insbesondere einem Schlauch, verbunden. Jede Zuführeinrichtung kann beispielsweise mit einer Flüssigkeits- oder Gasquelle verbunden sein.

Gemäß einer vorteilhaften Alternative ist jedes Durchgangsloch derart ausgebildet, daß es an die Form üblicherweise verwendeter Laborkomponenten (z. B. Pipette) angepasst ist.

Vorteilhafterweise kann jedes Durchgangsloch mit einem Septum verschlossen werden. Die Septen können beispielsweise Silikon, Teflon, Naturkautschuk, Gummi, Styrol-Butadien-Gummi oder Butyl umfassen. Das Material der Steckereinrichtung kann Kunststoff oder Aluminium umfassen.

Vorzugsweise umfassen die beschriebenen Durchgangslöcher Mikrofilter.

Gemäß einer vorteilhaften Weiterbildung der beschriebenen Steckereinrichtungen umfassen diese Verschlusselemente. Gemäß einer vorteilhaften Alternative ist die Steckereinrichtung insgesamt als Verschlusseinrichtung ausgebildet. Gemäß einer weiteren vorteilhaften Alternative ist das Verschlusselement wie bei der zuvor beschriebenen Steckereinrichtung ausgebildet. Insbesondere kann das Verschlusselement als Folie oder Membran ausgebildet sein, die vor Verwendung der Steckereinrichtung entfernt wird.

Erfindungsgemäß umfasst die Steckereinrichtung ein Flüssigkeitsreservoir und/oder ein Gasreservoir.

Es ist von Vorteil, wenn die zuvor beschriebene Steckereinrichtung elektronische Komponente umfasst. Beispielsweise kann die Steckereinrichtung Elektroden umfassen, die derart ausgebildet sind, dass sie in das durchströmbare Volumen reichen, wodurch in der Flüssigkeit eine elektrische Spannung angelegt werden kann. Sie können auch gleichzeitig in ein in die Steckereinrichtung integriertes Flüssigkeitsreservoir reichen und somit eine leitende Verbindung zwischen dem Flüssigkeitsreservoir und dem durchströmbaren Volumen bilden. Die elektronischen Komponenten können zusätzlich als Steuereinrichtungen ausgebildet sein und die Zugabe von Flüssigkeit und/oder Gas in das durchströmbare Volumen steuern. Alternativ kann diese Zugabe auch über externe Anschlüsse gesteuert werden. Die Steuerung kann sich bspw. auf die Menge und/oder Zeitdauer beziehen; die Zugabe kann mittels Druckluft erfolgen. Ein weiterer Vorteil dieser Weiterbildung besteht darin, dass durch die unmittelbare Nähe des Flüssigkeits- oder Gasreservoirs zum durchströmbaren Volumen die benötigte Menge an Flüssigkeit oder Gas stark reduziert werden kann. Vorteilhafterweise können die integrierten Flüssigkeitsreservoire ein Durchgangsloch umfassen, das oberhalb der Grundfläche in das Flüssigkeitsreservoir mündet. Fließt somit eine Flüssigkeit aus dem durchströmbaren Volumen durch das Durchgangsloch in das Flüssigkeitsreservoir, wird ein Rückfließen verhindert.

Es wird auch eine Steckervorrichtung aus mindestens zwei Steckereinrichtungen beschrieben, wobei die Steckereinrichtungen als Einheit ausgebildet sind. Eine solche Steckervorrichtung kann mit mehreren Anschlusseinrichtungen gleichzeitig in Eingriff gebracht werden.

Falls die Steckervorrichtung wenigstens zwei Flüssigkeitsreservoire umfasst, können diese vorteilhafterweise über eine Durchgangsöffnung miteinander verbunden sein. In dieser Durchgangsöffnung können bspw. Mikrofilter angeordnet sein.

Bei Anschlusseinrichtungen in Form sich verjüngender Vertiefungen können die Steckervorrichtung und die Anschlusseinrichtungen ebenfalls derart ausgebildet sein, dass die Steckervorrichtung, nachdem sie mit den Anschlusseinrichtungen in Eingriff gebracht wurde, nicht über die Oberfläche des Mikrofluidsystems ragt.

Durch die Steckervorrichtung wird ein aufsteckbares Modul bereitgestellt, das bspw. einen Reaktions-, Sammel- und/oder Aufreinigungsbereich umfassen kann.

Es wird außerdem ein Mikrofluidsystem mit mindestens einem durchströmbaren Volumen beschrieben, in welchem jedes durchströmbare Volumen in ein Flüssigkeitsreservoir mündet und die Mündung jedes Volumens oberhalb der Grundfläche des entsprechenden Flüssigkeitsreservoirs angeordnet ist. Das Mikrofluidsystem kann insbesondere eines der oben beschriebenen Mikrofluidsysteme sein.

Mit einem solchen Mikrofluidsystem wird in vorteilhafter Weise erreicht, dass eine Flüssigkeit, die durch das durchströmbare Volumen in das Flüssigkeitsreservoir fließt, von dem Flüssigkeitsreservoir aufgenommen wird und nicht mehr in das durchströmbare Volumen zurückfließt. Somit kann beispielsweise das Volumen mit verschiedenen Flüssigkeiten direkt hintereinander durchspült werden, die dann jeweils von dem Flüssigkeitsreservoir aufgenommen werden, so daß sich die Flüssigkeiten in dem Volumen nicht vermischen.

Gemäß einer vorteilhaften Weiterbildung dieses Mikrofluidsystems kann jedes Flüssigkeitsreservoir auf der Oberfläche des Mikrofluidsystems angeordnet sein. Auf diese Weise ist jedes Reservoir einfach und schnell von außen zugänglich, was beispielsweise die Flüssigkeitsentnahme aus dem Reservoir erleichtert. Jedes Reservoir kann abgedeckt sein.

Vorzugsweise kann jedes durchströmbare Volumen durch einen Hohlzylinder geführt werden, der innerhalb des entsprechenden Flüssigkeitsreservoirs auf der Grundfläche des Flüssigkeitsreservoirs stehend ausgebildet ist. Somit wird das durchströmbare Volumen durch die Grundfläche des Flüssigkeitsreservoirs geführt. Der Querschnitt des Hohlzylinders kann beliebig ausgebildet sein, es kann sich beispielsweise um einen Hohlzylinder mit einem kreisförmigen Querschnitt innen und außen handeln. Auf diese Weise kann das Mikrofluidsystem einfach hergestellt werden. Jeder Hohlzylinder kann direkt entlang einer Seitenfläche des Flüssigkeitsreservoirs angeordnet sein und in die Seitenwand übergehen oder davon entfernt angeordnet sein.

Gemäß einer vorteilhaften Alternative weist das Flüssigkeitsreservoir eine Seitenwand auf, in die das durchströmbare Volumen teilweise integriert ist. Die Mündung des Volumens befindet sich demnach in der Seitenwand oberhalb der Grundfläche des Reservoirs.

Jedes durchströmbare Volumen kann statt durch einen Hohlzylinder auch durch einen anderen Hohlkörper innerhalb des Flüssigkeitsreservoirs geführt werden. Ein solcher Hohlkörper kann sich beispielsweise in einer Richtung verjüngen.

Wenn jedes durchströmbare Volumen innerhalb des Flüssigkeitsreservoirs als Hohlzylinder ausgebildet ist, kann der Hohlzylinder eine abgeschrägte Oberfläche aufweisen. Damit wird verhindert, dass die austretende Flüssigkeit nach oben spritzt; sie fließt statt dessen zur Seite.

Vorzugsweise kann das Material des Mikrofluidsystems einen Kunststoff umfassen, wie Polycarbonat oder Polyolefine, wodurch eine einfache Herstellung mittels Spritzgussverfahren oder Extrudierens möglich ist.

Weitere Merkmale der Erfindung werden anhand der Ausführungsbeispiele in den Zeichnungen beschrieben. Dabei zeigen in schematischer Form:
Fig. 1 einen Querschnitt durch ein Mikrofluidsystem und eine Steckereinrichtung in Form einer Vertiefung,
Fig. 2 einen Querschnitt durch ein Mikrofluidsystem mit einer auf eine Pipettenspitze angepassten Anschlusseinrichtung,
Fig. 3 in dreidimensionaler Ansicht den Verlauf einer Anschlusseinrichtung in Form einer Vertiefung mit einer abschnittsweise konischen Verjüngung,
Fig. 4 in dreidimensionaler Ansicht den Verlauf einer Anschlusseinrichtung in Form einer Vertiefung mit einer hyperbolischen Verjüngung,
Fig. 5 in dreidimensionaler und Querschnittsansicht eine Darstellung einer Anschlusseinrichtung mit einem Absatz,
Fig. 6 einen Querschnitt durch eine Anschlusseinrichtung in Form einer konischen Erhöhung und mit einer Steckereinrichtung mit und ohne Einrastelement,
Fig. 7 einen Querschnitt durch ein Mikrofluidsystem mit einer strukturierten Oberfläche und eine Anschlusseinrichtung in Form einer konischen Vertiefung,
Fig. 8 einen Querschnitt durch ein Mikrofluidsystem mit einer strukturierten Oberfläche und eine Steckereinrichtung mit einem Einrastelement,
Fig. 9a eine perspektivische Ansicht einer Steckervorrichtung,
Fig. 9b eine perspektivische Ansicht eines Mikrofluidsystems mit einer Anschlussvorrichtung,
Fig. 9c einen Querschnitt durch ein System aus einer Steckervorrichtung und einem Mikrofluidsystem mit einer Anschlussvorrichtung,
Fig. 10a einen Querschnitt durch ein Mikrofluidsystem und eine Steckereinrichtung mit Ausbuchtungen zum Lösen der Steckereinrichtung,
Fig. 10b einen Querschnitt durch ein Mikrofluidsystem und eine Steckereinrichtung mit ausgerasteten Einrastelementen,
Fig. 11 einen Querschnitt durch ein Mikrofluidsystem mit einem durchströmbaren Volumen und einem Flüssigkeitsreservoir,
Fig. 12 einen Querschnitt durch ein Mikrofluidsystem und eine Steckereinrichtung mit einem Flüssigkeitsreservoir,
Fig. 13 einen Querschnitt durch ein Mikrofluidsystem und eine Steckereinrichtung mit einem Durchgangsloch für eine Pipette,
Fig. 14a und 14b einen Querschnitt eines weiteren Beispiels für ein Mikrofluidsystem und eine Steckereinrichtung mit einem Flüssigkeitsreservoir,
Fig. 15a und 15b einen Querschnitt eines weiteren Beispiels für ein Mikrofluidsystem und eine Steckereinrichtung mit einem Flüssigkeitsreservoir,
Fig. 16a und 16b einen Querschnitt eines Mikrofluidsystems und einer Steckereinrichtung mit einem Verschlusselement,
Fig. 17a und 17b einen Querschnitt durch ein Mikrofluidsystem mit einem durchströmbaren Volumen, das durch eine Steckereinrichtung verschlossen wird,
Fig. 18a und 18b einen Querschnitt durch ein Mikrofluidsystem mit einem Verschlusselement,
Fig. 19 einen Querschnitt durch ein Mikrofluidsystem mit einem beschichteten Bereich,
Fig. 20a, 20b und 20c einen Querschnitt durch ein weiteres Mikrofluidsystem mit einem Verschlusselement,
Fig. 21 aund 21 b eine Variante des Mikrofluidsystems von Fig. 19a und 19b,
Fig. 22a, 22b, 22c und 22d einen Querschnitt durch ein weiteres Mikrofluidsystem mit einem Verschlusselement,
Fig. 23a und 23b einen Querschnitt durch ein weiteres Mikrofluidsystem mit einem Verschlusselement,
Fig. 24 einen Querschnitt durch ein Mikrofluidsystem mit einer Steckervorrichtung,
Fig. 25a und 25b einen Querschnitt durch ein Mikrofluidsystem mit Verschlusselementen und mit einer Steckervorrichtung, und
Fig. 26a und 26b eine Explosionsansicht eines Mikrofluidsystems mit einem Verschlusselement

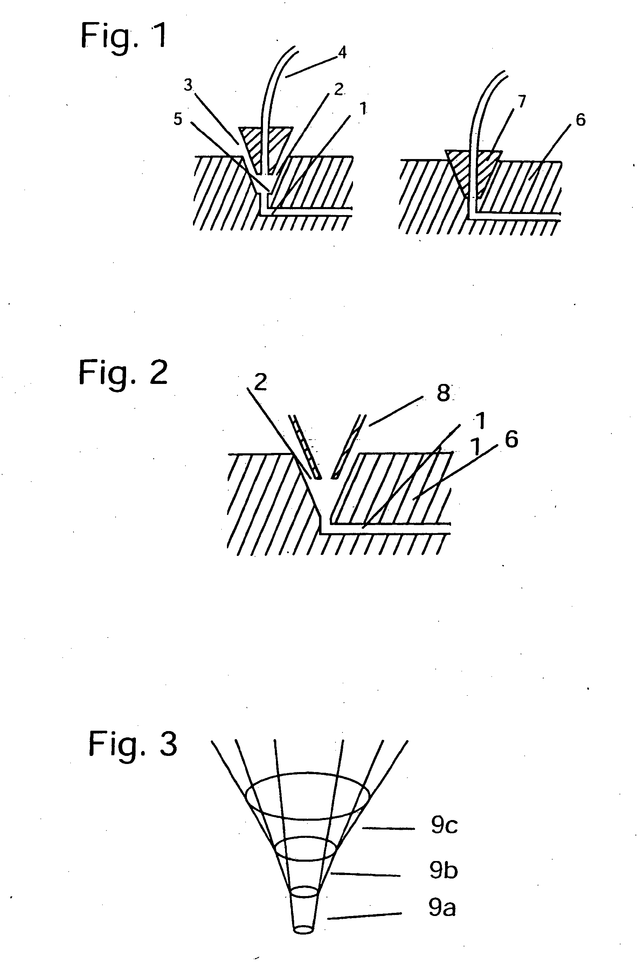

Fig. 1 zeigt den Querschnitt eines Mikrofluidsystems 6 und einer Steckereinrichtung 7. In dem Mikrofluidsystem 6 befindet sich ein durchströmbares Volumen 1 in Verbindung mit der Anschlusseinrichtung in Form einer Vertiefung mit konischer Verjüngung 2 und einem Absatz 5 zur Vermeidung von Totvolumen. Die Steckereinrichtung ist ebenfalls in Form einer konischen Verjüngung 3 in Steckrichtung ausgebildet. Die Steckereinrichtung umfasst ein Durchgangsloch, mit dem ein Schlauch 4 verbunden ist.

In Fig. 2 wird der Querschnitt einer Anschlusseinrichtung gezeigt, welche für eine Pipettenspitze 8 optimiert ist. In das Volumen 2 des Mikrofluidsystems 6 mit der konischen Anschrägung 2 kann somit mit einer Pipette Flüssigkeit ohne Totvolumen eingefüllt werden. Für handelsübliche Pipetten kann der kleinste (untere) Innendurchmesser zwischen 0.4 mm und 1 mm liegen, der größte (obere) Innendurchmesser zwischen 0.7 mm und 6 mm und die Tiefe der Vertiefung zwischen 1 mm und 15 mm liegen.

Fig. 3 zeigt den Verlauf einer Anschlusseinrichtung in Form einer Vertiefung mit abschnittsweise konischer Verjüngung 9a, 9b und 9c, bei der sich die Öffnungswinkel der Kegelstümpfe nach unten verringern, in einer dreidimensionalen Darstellung. Dadurch können verschieden Pipettenspitzen verwendet werden, ohne das ein nennenswertes Totvolumen entsteht.

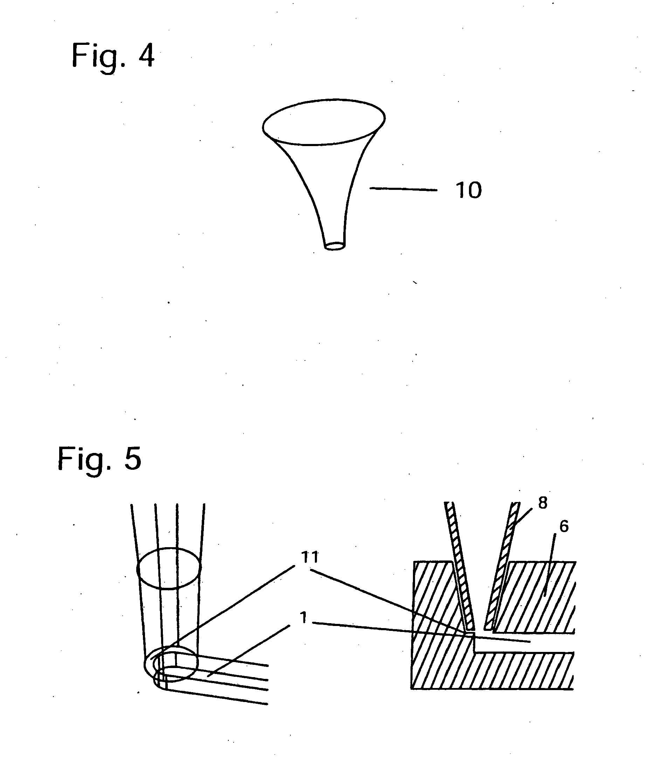

Fig. 4 zeigt den Verlauf einer Anschlusseinrichtung in Form einer Vertiefung mit hyperbolischer Verjüngung 10.

Fig. 5 zeigt in dreidimensionaler und Querschnittsansicht ein Ausführungsbeispiel eines Mikrofluidsystems 6 mit einer Anschlusseinrichtung mit einem Absatz 11. Dadurch ist gewährleistet, dass die in der Pipettenspitze 8 befindliche Flüssigkeit auch bei festem Aufsetzen der Pipettenspitze in das durchströmbare Volumen 1 gelangen kann. Hier ist der Absatz in Form eines Halbringes ausgebildet.

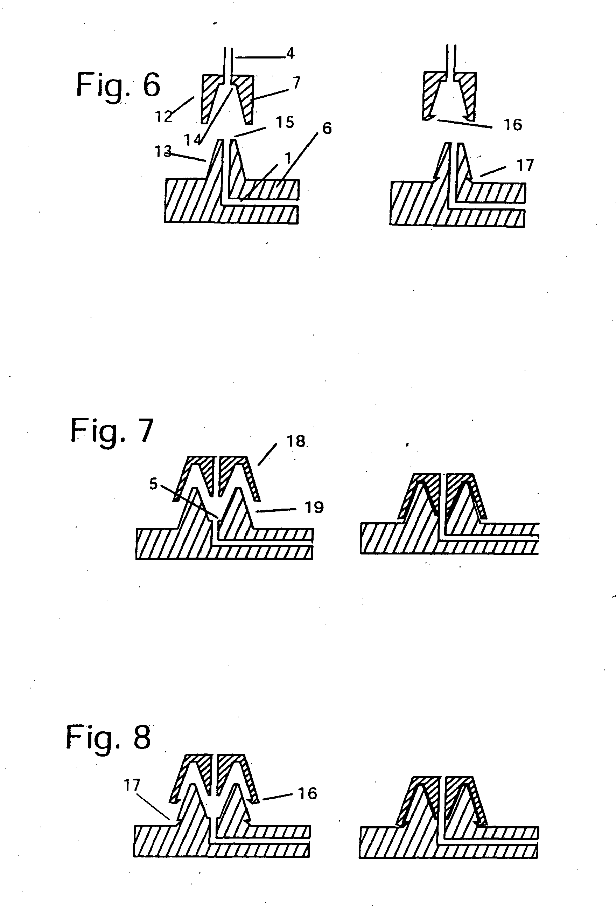

In Fig. 6 sind zwei Ausführungsbeispiele einer Anschlusseinrichtung in Form einer sich konisch verjüngenden Erhöhung 13 zu sehen. Die an die Anschlusseinrichtung angepaßte Steckereinrichtung 7 weist innen eine konische Verjüngung gegen die Steckrichtung auf. Die Außenfläche 12 ist zylindrisch. Zur Vermeidung von Totvblumens sind an der Steckereinrichtung und an der Anschlusseinrichtung Absätze 14 und 15 ausgebildet. Im Gegensatz zu dem Ausführungsbeispiel auf der linken Seite, weist das Beispiel auf der rechten Seite Einrastelemente 16 in Form von Widerhaken und entsprechende Aussparungen 17 auf. Damit kann die Steckereinrichtung besonders fest und dicht mit der Anschlusseinrichtung verbunden werden.

Die Anschlusseinrichtung kann beispielsweise in Form einer konischen Erhöhung ausgebildet sein, bei der der Öffnungswinkel des Kegelstumpfes 6° beträgt und der kleinste (obere) Durchmesser zwischen 3.5 mm und 4.5 mm liegt. Die Höhe der Erhöhung kann zwischen 6 mm und 9 mm variieren. Damit können die aus der Medizin bekannten Luer-Stecker in vorteilhafter Weise fest mit dem Mikrofluidsystem verbunden werden.

Fig. 7 zeigt ein Ausführungsbeispiel eines Mikrofluidsystems mit einer strukturierten Oberfläche in Form einer konischen Erhöhung 19. Die Anschlusseinrichtung ist in Form einer sich konisch verjüngenden Vertiefung ausgebildet. Dadurch können sowohl die äußeren als auch die inneren Abmessungen an die Abmessungen üblicher Laborkomponenten angepasst werden. So können beispielsweise sowohl Standardstecker, Pipettenspitzen als auch spezielle Stecker verwendet werden. In dem gezeigten Beispiel ist die Steckereinrichtung derart ausgebildet, dass sie einen Teil der die Anschlusseinrichtung umgebenden Oberfläche überdeckt, wodurch die Stabilität erhöht wird. Wie in Fig.1 ist auch hier ein Absatz 5 zum Vermeiden von Totvolumen dargestellt. Rechts wird die Anschlusseinrichtung und das Mikrofluidsystem im verbundenem Zustand gezeigt.

Fig. 8 zeigt einen ähnliches Mikrofluidsystem mit Steckereinrichtung wie Fig. 7; allerdings sind an der Steckereinrichtung Widerhaken 16 und an der Anschlusseinrichtung Aussparungen 17 angebracht, die es erlauben, die Steckereinrichtung besonders fest und dicht auf die Anschlusseinrichtung aufzusetzen.

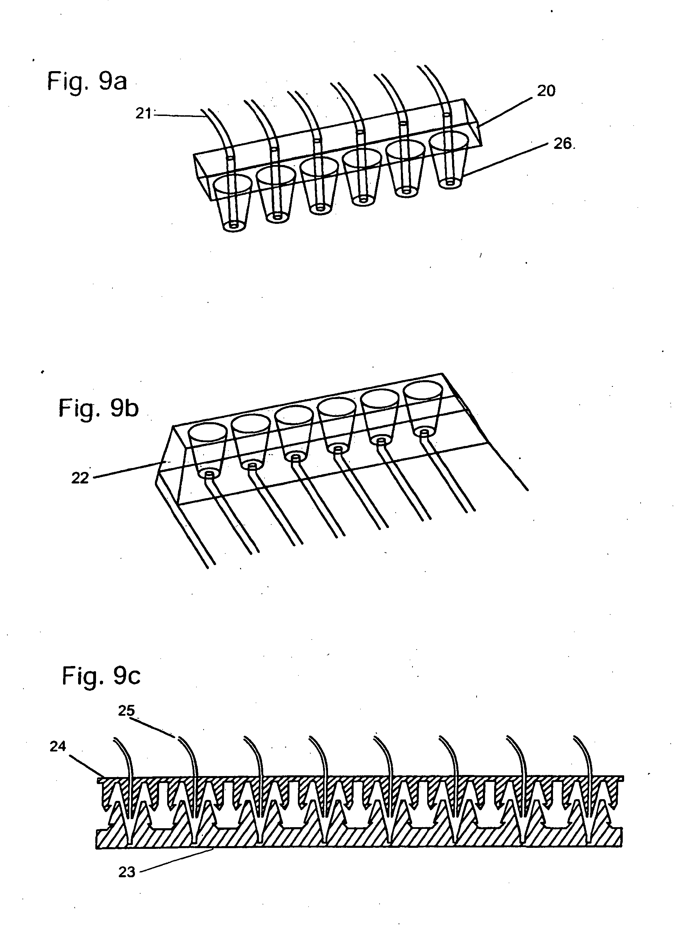

Fig. 9a zeigt eine Steckervorrichtung, bei der mehrere Stecker als Einheit ausgebildet sind. Die Steckervorrichtung umfasst eine Steckerleiste 20, an der konisch geformte Teilelemente 26 angeordnet sind. Mit der Steckerleiste sind Schläuche 21 verbunden.

Fig. 9b zeigt ein der Steckervorrichtung aus Fig. 9a entsprechende Mikrofluidsystem mit einer Anschlussvorrichtung 22, die mehrere Anschlusseinrichtungen und damit verbundene durchströmbare Volumina umfasst.

In Fig. 9c ist ein Querschnitt durch eine Steckervorrichtung 24 mit Schläuchen 25 und eine Anschlussvorrichtung 23 gezeigt. Die Anschlussvorrichtung 23 kann mit der Steckervorrichtung 24 über entsprechende Widerhaken fest verbunden werden.

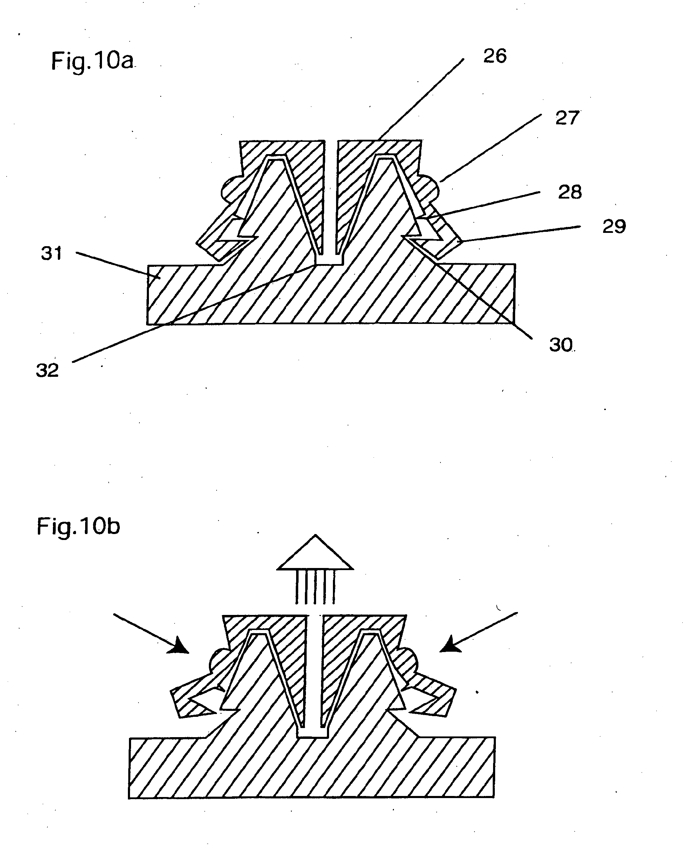

Fig. 10a zeigt ein Ausführungsbeispiel eines Widerhakensystems als Querschnittszeichnung. In die Steckereinrichtung 26 ist eine zusätzliche Ausbuchtung 27 sowie ein Abstandhalter 28 angebracht. Über den Widerhaken 29 ist die Steckereinrichtung über die Aussparung 30 fest mit dem Mikrofluidsystem 31 verbunden, so dass das Volumen 32 einfach befüllt werden kann. Durch das Zusammenpressen der Ausbuchtungen 27 (siehe Fig. 10b) wird aufgrund des Abstandhalters 28 ein Drehmoment erzeugt, welches die Widerhaken 29 auseinanderbewegt und damit die Steckereinrichtung von der Anschlusseinrichtung löst.

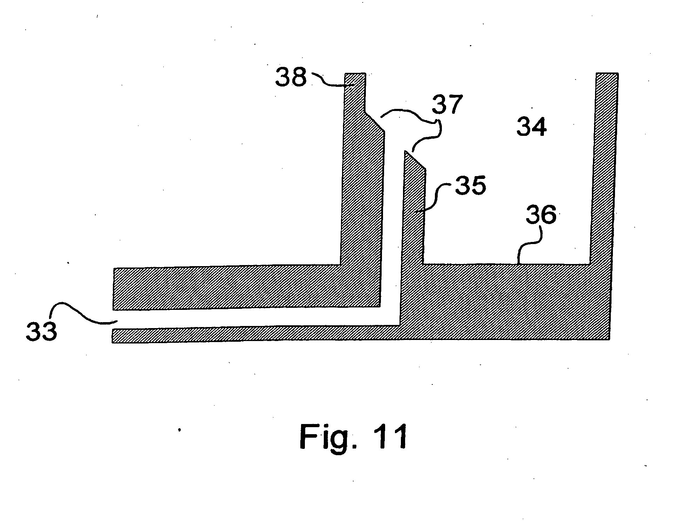

In Fig. 11 ist ein Mikrofluidsystem mit einem durchströmbaren Volumen 33 zu sehen, das in ein Flüssigkeitsreservoir 34 mündet. Innerhalb des Reservoirs 34 ist ein auf der Grundfläche 36 stehender Hohlzylinder ausgebildet. Das durchströmbare Volumen 33 wird durch die Grundfläche 36 durch den Hohlzylinder 35 geführt. Der Hohlzylinder 35 ist direkt entlang einer Seitenwand 38 angeordnet und geht in diese über. Die Oberfläche 37 des Zylinders 35 ist mündungsseitig abgeschrägt.

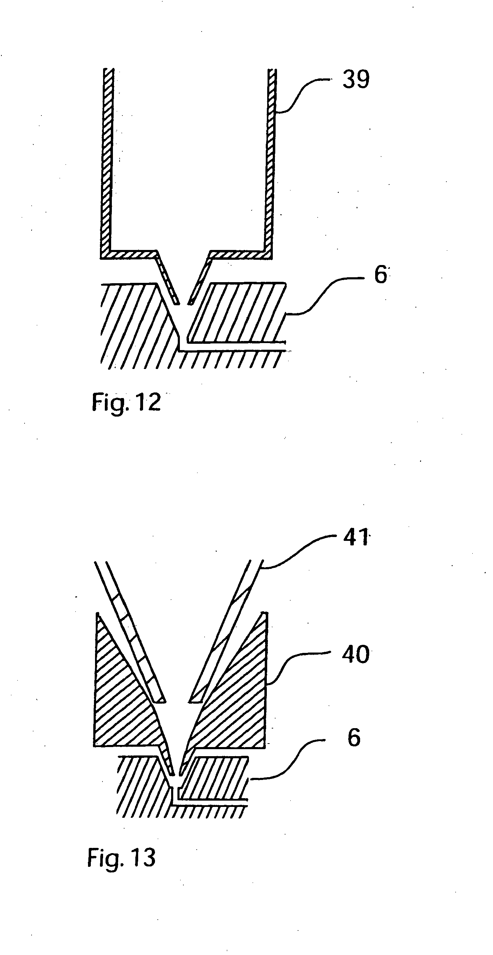

Fig. 12 zeigt ein Ausführungsbeispiel einer Steckereinrichtung 39, die ein Flüssigkeitsreservoir umfasst. Die Anschlusseinrichtung ist zur Aufnahme eines Luer-Lock-Elements ausgebildet.

Fig. 13 zeigt ein Ausführungsbeispiel einer Steckereinrichtung 40, die ein Durchgangsloch zur Aufnahme einer Pipetten- oder Spritzenspitze 41 aufweist. In diesem Fall übernimmt also die Steckereinrichtung die Funktion eines Adapters.

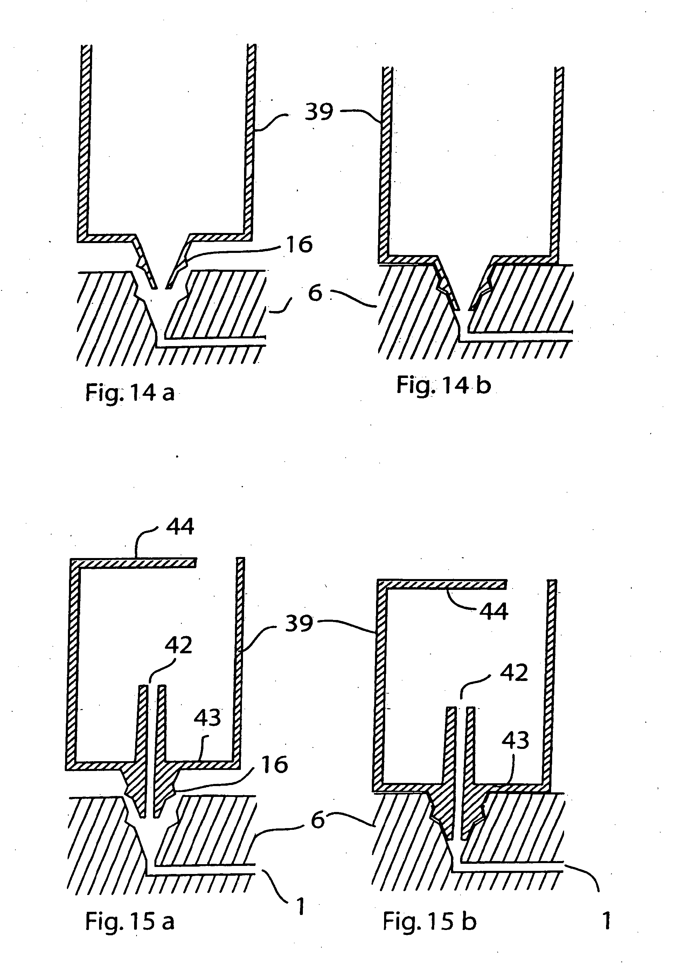

In Fig. 14a ist ein Mikrofluidsystem 6 und eine Steckereinrichtung 39 mit einem Flüssigkeitsreservoir zu sehen, wobei die Steckereinrichtung 39 Einrastelemente 16 aufweist. Fig. 14b zeigt die Steckereinrichtung in aufgestecktem Zustand.

Ein weiteres Ausführungsbeispiel eines Mikrofluidsystems 6 und einer Steckereinrichtung 39 mit einem Flüssigkeitsreservoir ist in Fig. 15a und 15b gezeigt. In diesem Beispiel mündet das Durchgangsloch 42 oberhalb der Grundfläche 43 in das Flüssigkeitsreservoir. Somit kann ein Rückfließen der in dem Flüssigkeitsreservoir befindlichen Flüssigkeit in das durchströmbare Volumen 1 verhindert werden. Die Flüssigkeit kann damit von dem Mikrofluidsystem entfernt und anschließend weiterverwendet oder entsorgt werden. Das Flüssigkeitsreservoir kann wenigstens teilweise mit einem Deckel 44 abgedeckt sein.

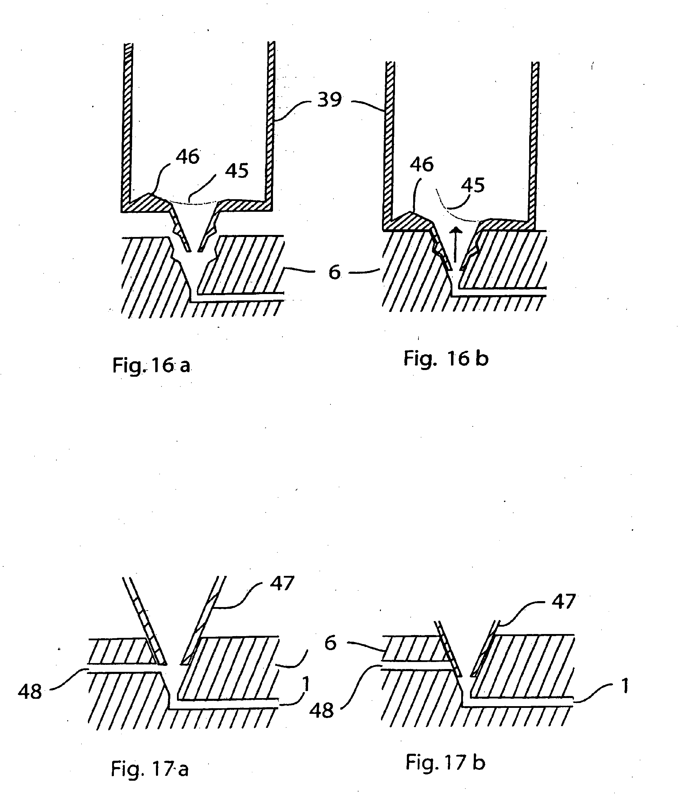

Fig. 16a und 16b zeigt ein Mikrofluidsystem 6 und eine Steckereinrichtung 39, bei der das Durchgangsloch ein Verschlusselement 45 in Form einer Folie aufweist. Die Folie ist an einer Stelle (hier rechts des Durchgangslochs) fixiert und weist eine Krümmung auf, aufgrund derer sie durch eine Federspannung das Durchgangsloch verschließt. Ansonsten liegt die Folie um das Durchgangsloch auf, vorzugsweise in einem abgeschrägten Bereich 46, um durch eine größere Auflagefläche einen optimalen Verschluss. zu gewährleisten. Wird die Folie von unten durch das Durchgangsloch mit Druck beaufschlagt (durch eine Flüssigkeit oder Gas), wie es in Fig. 16b mit dem Pfeil angedeutet ist, wirkt eine Kraft gegen die Federkraft, so dass das Durchgangsloch geöffnet wird.

Fig. 17a und 17b zeigt ein Mikrofluidsystem mit einem durchströmbaren Volumen 48, das oberhalb des ersten durchströmbaren Volumens 1 in die Anschlusseinrichtung mündet. Wenn eine Steckereinrichtung 47 in die Anschlusseinrichtung gesteckt wird, verschließt sie somit das durchströmbare Volumen 48; eine Flüssigkeit oder ein Gas kann dann nur in das Volumen 1 gelangen.

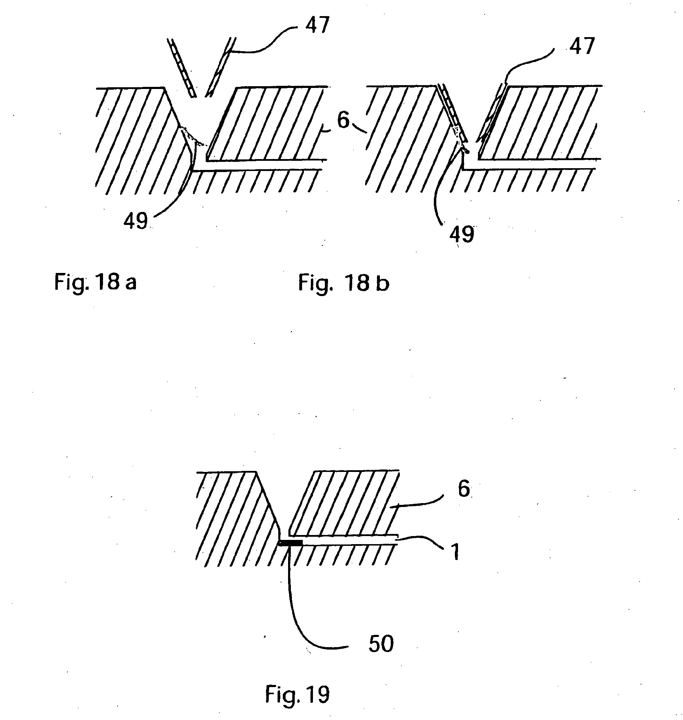

In Fig. 18a und 18b ist in der Anschlusseinrichtung ein Verschlusselement 49 in Form einer gekrümmten Folie angeordnet, die aufgrund ihrer Federspannung die Anschlusseinrichtung verschließt. Eine in die Anschlusseinrichtung gesteckte Steckereinrichtung drückt die Feder zur Seite (Fig. 18b), so dass die Anschlusseinrichtung geöffnet wird.

Fig. 19 zeigt ein Mikrofluidsystem mit einem beschichteten Bereich 50, durch den die innere Oberfläche des durchströmbaren Volumens 1 unterhalb der Anschlusseinrichtung hydrophobisiert wird.

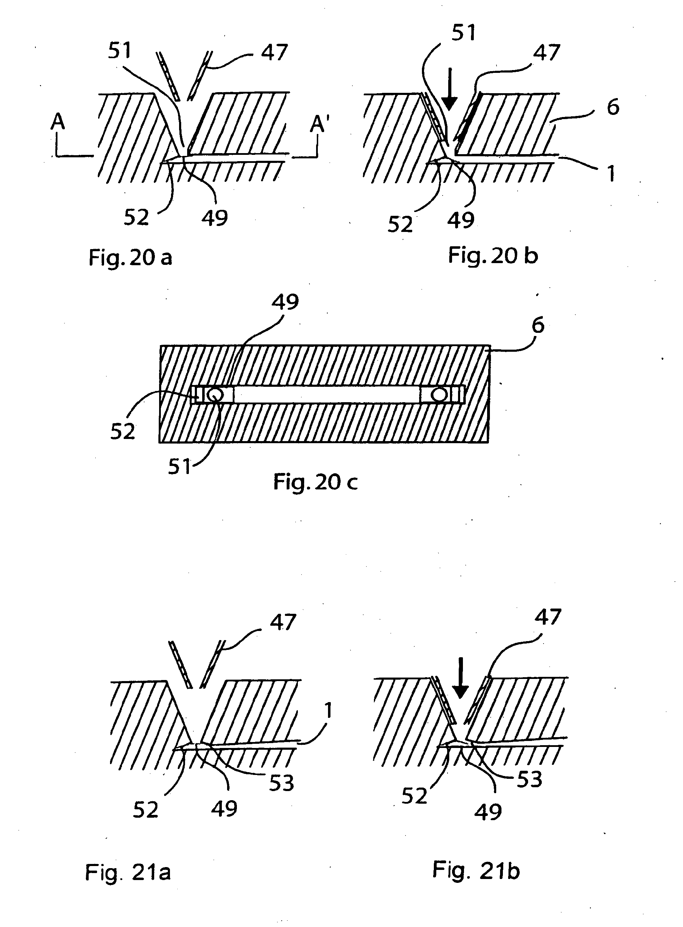

In Fig. 20a ist ein Mikrofluidsystem 6 mit einem Verschlusselement 49 in Form einer Folie zu sehen, die die Mündung 51 des durchströmbaren Volumens 1 in die Anschlusseinrichtung durch Federkraft verschließt. Die Folie ist im Bereich 52 an der inneren Oberfläche des Volumens 1 fixiert. Wird die Folie mit Druck beaufschlagt (durch den Pfeil in Fig. 20b angezeigt), so wird die Folie nach unten gedrückt und gibt die Mündung 51 frei. In Fig. 20c ist ein Querschnitt längs der Achse A-A' gezeigt.

Fig. 21 a und 21 b zeigt eine Variante des Mikrofluidsystems von Fig. 19a und 19b, bei der die innere Oberfläche des durchströmbaren Volumens 1 in einem Bereich 53 der Mündung 51 angeschrägt ist, um somit durch eine größere Auflagefläche der Folie 49 einen optimalen Verschluss zu ermöglichen.

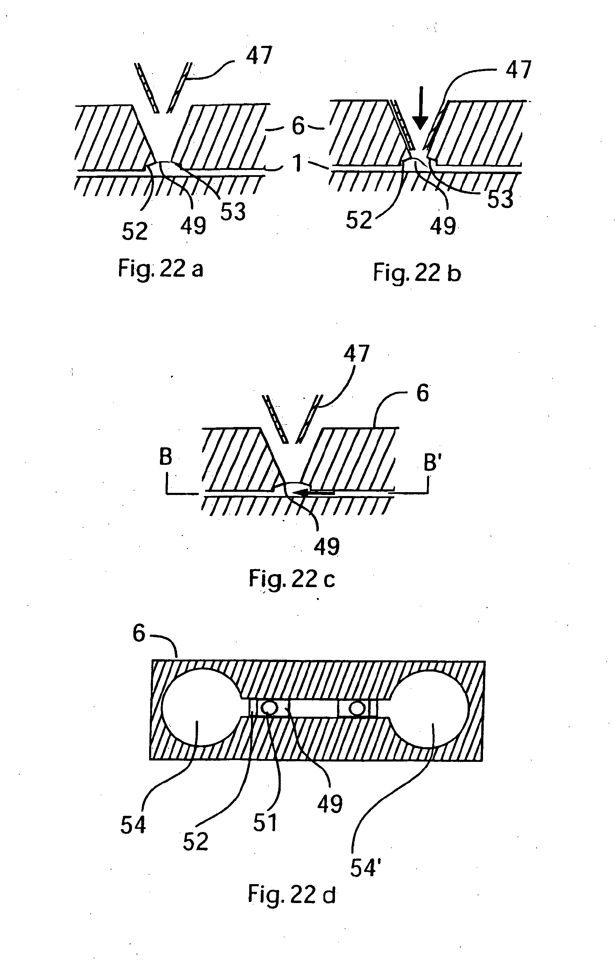

In Fig. 22a bis 22d ist ein Mikrofluidsystem 6 mit einem durchströmbaren Volumen 1 dargestellt, das zwei Reservoire 54 und 54' verbindet. In den Kanal münden zwei Anschlusseinrichtungen, die durch Folien 49 und 49' verschlossen sind. Fig. 22c ist ein Querschnitt längs der Achse B-B'. Wird eine Folie mit Druck beaufschlagt (Fig. 22b), so öffnet sie die Mündung 51, wobei aber nur eine Seite des Volumens 1 zugänglich wird. Nach Entfernen der Steckereinrichtung 47 wird die Mündung wieder geschlossen und die Verbindung über das Volumen 1 zu dem anderen Reservoir freigegeben.

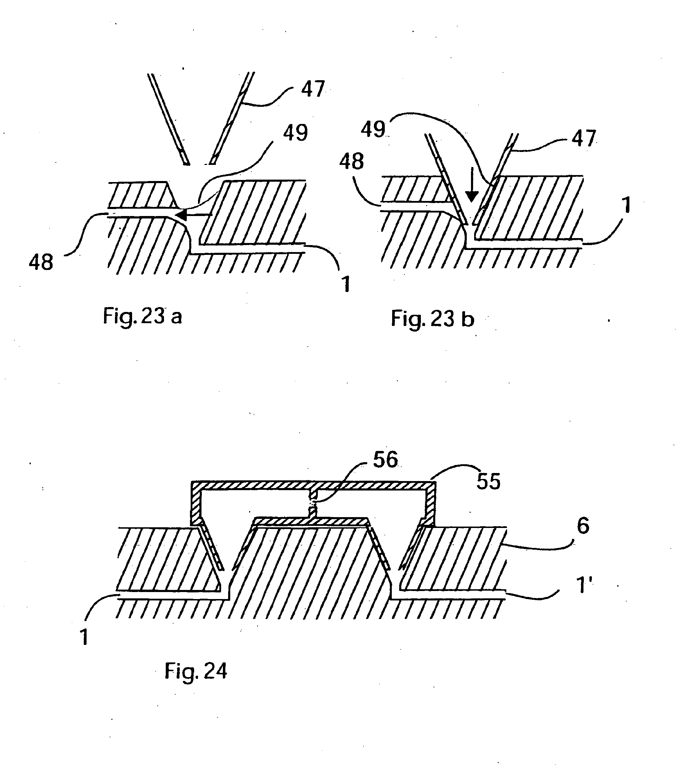

Fig. 23a und 23b zeigt eine Kombination der Ausführungsbeispiele der Figuren 17 und 18. Ohne Steckereinrichtung 47 wird die Anschlusseinrichtung durch eine Folie 49 verschlossen, während die Kanäle 1 und 48 in Verbindung stehen. Falls eine Steckereinrichtung 47 in die Anschlusseinrichtung gesteckt wird, wird dadurch der Kanal 48 geschlossen und die Folie 49 zur Seite gedrückt.

In Fig. 24 ist ein Mikrofluidsystem 6 mit einer Steckervorrichtung 55 dargestellt, die zwei Flüssigkeitsreservoire umfasst, die wiederum über ein Durchgangsloch 56 mit Mikrofilter verbunden sind.

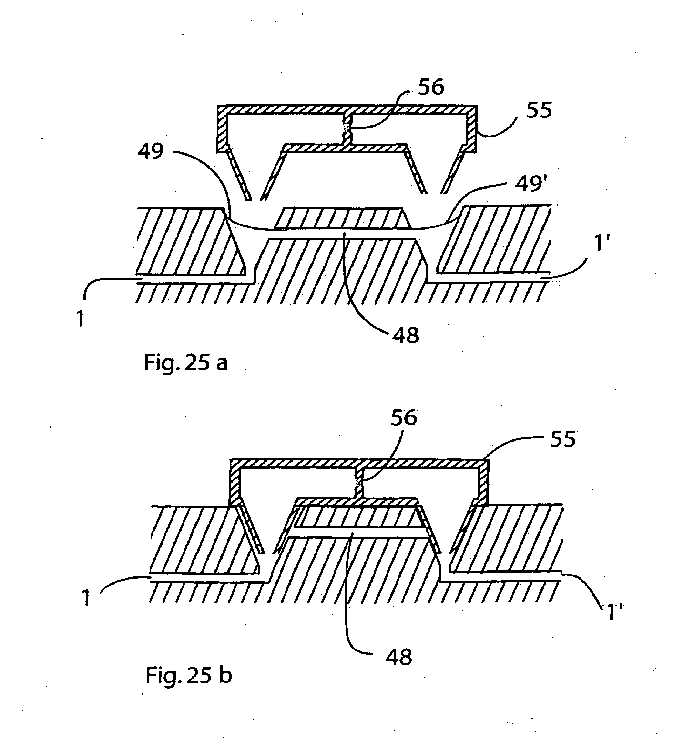

In Fig. 25a ist ein Mikrofluidsystem mit zwei Anschlusseinrichtungen und einer zugehörigen Steckervorrichtung zu sehen. Die Anschlusseinrichtungen sind über einen Kanal 48 miteinander verbunden und über Folien 49 und 49' nach außen verschlossen. Wenn die Steckervorrichtung 55 aufgesteckt wird (Fig. 25b), sind die Kanäle 1 und 1' nur noch über das Durchgangsloch 56 zwischen den Flüssigkeitsreservoiren miteinander verbunden. Durch einen in dem Durchgangsloch 56 angeordneten Mikrofilter kann somit die Flüssigkeit gefiltert werden. Alternativ können die Flüssigkeitsreservoire beispielsweise auch als Reaktionsbereiche dienen, die nach durchgeführter Reaktion wieder von dem Mikrofluidsystem entfernt werden.

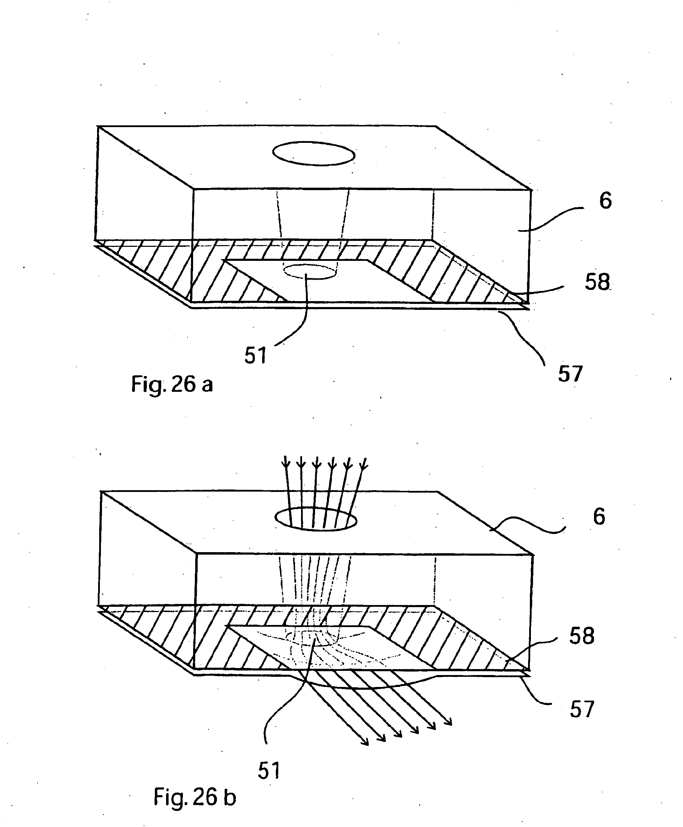

Fig. 26a zeigt eine Explosionsansicht eines Teils eines Mikrofluidsystems 6 mit einem Verschlusselement 57 in Form einer elastischen Membran oder Folie 57, die direkt auf der inneren Oberfläche 58 eines durchströmbaren Volumens angeordnet ist und die Mündung 51 der Anschlusseinrichtung verschließt. Bei Beaufschlagung mit Druck (in Fig. 26b durch Pfeile angedeutet), dehnt sich die Membran 57 und gibt die Öffnung 51 frei.

## Patentansprüche

1. System umfassend:
ein Mikrofluidsystem (6) mit mindestens einem durchströmbaren Volumen (1) und mindestens einer mit dem Volumen verbundenen Anschlusseinrichtung, die in Form einer sich verjüngenden Vertiefung oder einer sich verjüngenden Erhöhung ausgebildet ist, und
eine Steckereinrichtung (39);
wobei die Steckereinrichtung derart ausgebildet ist, dass sie in Eingriff mit der Anschlusseinrichtung bringbar ist und wenigstens teilweise flächig an der Anschlusseinrichtung anliegt, wobei die Steckereinrichtung ein Flüssigkeitsreservoir und/oder ein Gasreservoir umfasst, und wobei die Steckereinrichtung derart ausgebildet ist, dass sie an einem Teil der die Anschlusseinrichtung umgebenden Oberfläche des Mikrofluidsystems flächig anliegt.

2. System nach Anspruch 1, wobei die Steckereinrichtung mindestens ein Einrastelement (16) in Form einer Ausbuchtung umfasst.

3. System nach einem der Ansprüche 1 - 2, wobei die Steckereinrichtung mindestens ein Durchgangsloch (42) umfasst.

4. System nach Anspruch 3, wobei jedes Durchgangsloch mit einer Zuführeinrichtung, insbesondere einem Schlauch, verbunden ist.

5. System nach einem der Ansprüche 1 - 4, wobei die Steckereinrichtung ein Verschlusselement (45) aufweist.

6. System nach einem der Ansprüche 1 - 5, wobei die Steckereinrichtung elektronische Komponenten umfasst.

## Claims

1. A system comprising:
a microfluid system (6) comprising at least one flow-through volume (1) and at least one connection means connected to the volume and configured in the form of a tapered recess or a tapered elevation, and
a plug means (39);
wherein the plug means is configured such that it can be brought into engagement with the connection means and such that it rests at least partly in planar form on the connection means, wherein the plug means comprises a liquid reservoir and/or a gas reservoir, and wherein the plug means is designed such that it rests in planar fashion on part of the microfluid system surface which surrounds the connection means.

2. The system according to claim 1, wherein the plug means comprises at least one snap-in element (16) in the form of a bulge.

3. The system according to one of the claims 1 - 2, wherein the plug means comprises at least one through hole (42).

4. The system according to claim 3, wherein each through hole is connected to a feed means, especially a flexible tube.

5. The system according to one of the claims 1 - 4, wherein the plug means comprises a closing element (45).

6. The system according to one of the claims 1 - 5, wherein the plug means comprises electronic components.

## Revendications

1. Système comprenant :
un système microfluidique (6) comportant au moins un volume (1) pouvant être traversé par l'écoulement, et au moins un dispositif de raccordement relié au dit volume et réalisé sous la forme d'un creux qui se rétrécit ou d'un appendice en relief qui se rétrécit, et un dispositif à fiche de connexion (39) ;
système dans lequel le dispositif à fiche de connexion est conçu de manière à pouvoir être amené en prise avec le dispositif de raccordement, et s'appuie au moins partiellement par un contact de surface contre le dispositif de raccordement,
dans lequel le dispositif à fiche de connexion comprend un réservoir de liquide et/ou un réservoir de gaz, et
dans lequel le dispositif à fiche de connexion est conçu de manière à s'appuyer par contact de surface contre une partie de la surface du système microfluidique, entourant le dispositif de raccordement.

2. Système selon la revendication 1, dans lequel le dispositif à fiche de connexion comporte au moins un élément d'encliquetage (16) sous la forme d'une encoche.

3. Système selon l'une des revendications 1 - 2, dans lequel le dispositif à fiche de connexion comporte au moins un trou de passage (42).

4. Système selon la revendication 3, dans lequel chaque trou de passage est relié à un dispositif d'alimentation, notamment un tuyau souple.

5. Système selon l'une des revendications 1 - 4, dans lequel le dispositif à fiche de connexion comprend un élément de fermeture (45).

6. Système selon l'une des revendications 1 - 5, dans lequel le dispositif à fiche de connexion comprend des composants électroniques.
